# EUROPÄISCHE PATENTSCHRIFT

(11) **EP 0 674 680 B1**
(45) Veröffentlichungstag und Bekanntmachung des Hinweises auf die Patenterteilung: **12.03.1997**
(21) Anmeldenummer: 94929408.6
(22) Anmeldetag: 20.10.1994
(51) Int. Cl.: C08K 3/38, C08L 63/00, C08J 5/24

(54) **HALOGENFREIE HARZMISCHUNG, EIN DIESE HARZMISCHUNG ENTHALTENDES, SELBSTVERLÖSCHENDES PREPREG SOWIE DESSEN VERWENDUNG**
HALOGEN-FREE RESIN MIXTURE, A SELF-EXTINGUISHING PREPREG CONTAINING THIS MIXTURE AND THE USE OF SUCH A PREPREG
MELANGE DE RESINES EXEMPTES D'HALOGENE, PREIMPREGNE AUTOEXTINCTEUR CONTENANT CE MELANGE DE RESINES ET UTILISATION DE CE PREIMPREGNE

(30) Priorität: 21.10.1993 AT 2132/93
(43) Veröffentlichungstag der Anmeldung: 04.10.1995
(73) Patentinhaber: ISOVOLTA Österreichische Isolierstoffwerke Aktiengesellschaft, 2355 Wiener Neudorf (AT)
(72) Erfinder: JANOWITZ, Othmar, A-1230 Wien (AT); WALTER, Peter, A-2345 Brunn (AT)
(86) Internationale Anmeldenummer: AT9400154
(87) Internationale Veröffentlichungsnummer: WO9511272

(56) Entgegenhaltungen:
- EP-A- 0 281 226
- EP-A- 0 308 290
- EP-A- 0 388 037
- EP-A- 0 459 951
- US-A- 2 785 144
- CHEMICAL ABSTRACTS, vol. 106, no. 22, 1. Juni 1987, Columbus, Ohio, US; abstract no. 177805, 'Epoxy resin potting compositions'

## Beschreibung

### Technisches Gebiet

Die Erfindung betrifft eine halogenfreie Harzmischung auf Basis eines Epoxyharzes, eines Härters, eines Flammschutzmittels sowie Zusatzstoffen, ein diese Harzmischung aufweisendes, selbstverlöschendes Prepreg sowie dessen vorteilhafte Verwendung.

### Stand der Technik

Aus der EP-A-365784 ist es bekannt, Harzmischungen auf Basis eines Epoxyharzes mit Flammschutzmitteln zu versetzen, um die unter Verwendung dieser Harzmischungen hergestellten Halbteile (Prepregs) für deren weitere Verwendung brandbeständig zu machen. Als Flammschutzmittel werden halogenfreie Phosphor- und Stickstoffverbindungen vorgeschlagen. Diese Flammschutzmittel haben jedoch den Nachteil, daß sie sich im Brandfall in korrosive und zum Teil toxische Verbindungen wie Stickoxide und Phosphorsäurederivate zersetzen, welche bei der Verwendung des Halbteiles insbesondere im Maschinenbau Korrosionsschäden an den Maschinenteilen hervorrufen.

Ferner ist der Einsatz von Flammschutzmitteln wie Magnesiumhydroxid und Zinkcarbonat möglich, von denen es bekannt ist, daß sie im Brandfall keine korrosiven Zersetzungsprodukte bilden. Halbteile (Prepregs) auf Basis eines Harzes der eingangs genannten Art unter Einsatz dieser Flammschutzmittel erfüllen entweder nicht die hohen Anforderungen hinsichtlich der Brandbeständigkeit oder ergeben bei der Aushärtung keine Laminate mit hoher Dauertemperaturbeständigkeit (größer gleich Wärmeklasse F).

Ferner werden an Prepregs der eingangs genannten Art hohe Anforderungen hinsichtlich ihrer Verwendung gestellt. Ein wesentliches Kriterium für deren Verwendung sind die Verklebeeigenschaften. Insbesondere im Maschinenbau stellen derartige Halbteile (Prepregs) wesentliche Verbindungselemente zwischen den einzelnen Maschinenteilen sowie zwischen den eingesetzten Werkstoffen dar, wobei eine stabile Verbindung zwischen den einzelnen Maschinenteilen beziehungsweise Werkstoffen erzielt werden soll.

### Darstellung der Erfindung

Aufgabe der Erfindung ist es daher, eine halogenfreie Harzmischung der eingangs genannten Gattung anzugeben, welche die Bereitstellung eines Halbteiles (Prepreg) ermöglicht, das die bekannten Nachteile wie die Freisetzung korrosiver bzw. toxischer Verbindungen im Brandfall nicht aufweist und dennoch eine hohe Brand- und Dauertemperaturbeständigkeit sowie gute Verklebeeigenschaften aufweist.

Zur Lösung dieser Aufgabe wird erfindungsgemäß eine halogenfreie Harzmischung bestehend aus
a) 20 - 60 Gew.% Epoxyharz
b) 20 - 60 Gew.% phenolischer Novolakhärter
c) mindestens 5 Gew.% Zinkborat als Flammschutzmittel und
d) 0 - 30 Gew.% Zusatzstoffen
vorgeschlagen.

Diese Harzmischung enthält vorteilhafterweise als Epoxyharz eines auf Basis eines epoxidierten Phenolnovolaks oder Kresolnovolaks.

Ferner betrifft die Erfindung ein selbstverlöschendes Prepreg mit einem Harzauftrag von 40 - 200 %, welches durch Aufbringen einer halogenfreien Harzmischung bestehend aus
a) 20 - 60 Gew.% Epoxyharz
b) 20 - 60 Gew.% phenolischer Novolakhärter
c) mindestens 5 Gew.% Zinkborat als Flammschutzmittel und
d) 0 - 30 Gew.% Zusatzstoffen
auf flächige Trägermaterialien herstellbar ist.

Ferner wird vorgeschlagen, daß dieses Prepreg einen Harzauftrag von 40 bis 140 % enthält.

Als eingesetzte Trägermaterialien haben sich als besonders vorteilhaft Glasfasern, Aramidfasern und Acrylfasern erwiesen. Diese werden vorteilhafterweise in Form eines Geleges, Gewebes oder Vlieses eingesetzt.

Ferner kann das Trägermaterial aus einer Kunststoffolie bestehen.

Besonders gute Eigenschaften des Prepregs werden dadurch erreicht, daß es als Epoxyharz eines auf Basis eines epoxidierten Phenolnovolaks oder Kresolnovolaks aufweist.

Vorteilhafterweise wird das erfindungsgemäße Prepreg als Isolationsmaterial in elektrischen Maschinen und Umformern eingesetzt.

### Ein Weg zur Ausführung der Erfindung

Eine erfindungsgemäße Imprägnierharzmischung weist folgende Rezeptur auf:

| **Hauptkomponente** | **Menge** |
|---|---|
| Epoxynovolak/Festharzgehalt 75% | 118 g |
| phenolischer Novolakhärter/Festharzgehalt 65% | 203 g |
| Zinkborat | 100 g |

Als Zusatzstoffe werden ein ®Aerosil in einem Ausmaß von 2 g und ein Beschleuniger, beispielsweise Benzyldimethylamin, in einer Menge von 0,2 g eingesetzt.

Die obengenannten Rezepturkomponenten werden in Form einer acetonischen Suspension auf ein Glasfilamentgewebe (200 g/m²) aufgebracht und in einem vertikalen Trockner bei Temperaturen bis 170°C getrocknet (Herstellung des Prepregs A).

Anstelle des oben eingesetzten Zinkborates werden nunmehr in derselben Menge folgende Flammschutzmittel eingesetzt: Magnesiumhydroxid (Prepreg B), Zinkcarbonat (Prepreg C).

In der folgenden Tabelle werden Ergebnisse von Vergleichsversuchen betreffend das erfindungsgemäße Prepreg A und die aus dem Stand der Technik bekannten Prepregs B und C gegenübergestellt.

**Tabelle**

| | Prepreg A | B | C |
|---|---|---|---|
| **Brandbeständigkeit** | | | |
| Meßmethode 1 | Vₒ | V₁ | V₁ |
| Meßmethode 2 | Klasse A | Klasse B | Klasse B |
| | | | |
| **Dauertemperaturbeständigkeit** | > 155°C | < 155°C | < 155°C |
| | | | |
| **Verklebeeingeschaften** gemessen an der Zugscherfestigkeit [N/mm²] | 3.2 | 2.2 | 2.7 |

Die in der Tabelle angegebenen Werte hinsichtlich der Brandbeständigkeit wurden wie folgt ermittelt:

Gemäß Meßmethode 1 wurde die Brandprüfung an einem Laminat durchgeführt, welches aus acht Lagen der Prepregs A bis C durch Verpressen bei erhöhter Temperatur hergestellt wurde, wobei die eingesetzten Harze zum größten Teil ausgehärtet wurden.

Die Meßmethode 2 wurde an den nicht ausgehärteten Prepregs A bis C nach NEMA LI 1-11.11 durchgeführt.

Die Dauertemperaturbeständigkeit wurde an einem 3 mm dicken Laminat, welches aus 16 Lagen der Prepregs durch Heißverpressen hergestellt wurde, nach IEC 243 geprüft. Das Prüfkriterium ist die Biegefestigkeit nach DIN 7735 bei Raumtemperatur.

Die Zugscherfestigkeit wurde an Verbunden, bestehend jeweils aus den Prepregs A bis C, welche beidseitig mit 0,4 mm dicken, unbehandelten Kupferplatten verpreßt wurden, bei Raumtemperatur gemessen.

Beim Vergleich der in der Tabelle angegebenen Werte zeigt es sich, daß das erfindungsgemäße Prepreg A bessere Eigenschaften hinsichtlich Brandbeständigkeit, nämlich Klasse A, sowie eine bessere Dauertemperaturbeständigkeit, nämlich > 155°C aufweist, als die aus dem Stand der Technik bekannten Prepregs B und C, wobei Prepreg B als Flammschutzmittel Magnesiumhydroxid und Prepreg C als Flammschutzmittel Zinkcarbonat aufweist. Die Meßwerte betreffend die Zugscherfestigkeit zeigen, daß das erfindungsgemäße Prepreg A mindestens so gut verklebbar wie ähnliche, nicht flammgeschützte Prepregs und besser verklebbar ist als die bekannten, flammgeschützten Prepregs B und C.

### Gewerbliche Anwendbarkeit

Das erfindungsgemäße Prepreg A ist selbstverlöschend und eignet sich daher für die Verwendung als Isolationsmaterial in elektrischen Maschinen und Umformern, beispielsweise in Transformatoren. Als wesentliches Prüfkriterium für diesen Verwendungszweck dient die Durchschlagsfestigkeit. Diese wird üblicherweise an einer Lage des ausgehärteten Prepregs nach IEC 243 gemessen. Dabei wurde eine Durchschlagsfestigkeit von größer 30 kV/mm ermittelt. Dieser Prüfwert entspricht den Anforderungen, welche an Isolationsmaterialien für elektrische Maschinen und Umformern wie Transformatoren gestellt werden.

## Patentansprüche

1. Halogenfreie Harzmischung bestehend aus
a) 20 - 60 Gew.% Epoxyharz
b) 20 - 60 Gew.% phenolischer Novolakhärter
c) mindestens 5 Gew.% Zinkborat als Flammschutzmittel und
d) 0 - 30 Gew.% Zusatzstoffen.

2. Harzmischung nach Anspruch 1, dadurch gekennzeichnet, daß das Epoxyharz eines auf Basis eines epoxidierten Phenolnovolaks ist.

3. Harzmischung nach Anspruch 1, dadurch gekennzeichnet, daß das Epoxyharz eines auf Basis eines epoxidierten Kresolnovolaks ist.

4. Selbstverlöschendes Prepreg mit einem Harzauftrag von 40 - 200 %, herstellbar durch Aufbringen einer halogenfreien Harzmischung gemäß Anspruch 1 auf flächige Trägermaterialien.

5. Prepreg nach Anspruch 4, dadurch gekennzeichnet, daß der Harzauftrag 40 bis 140 % beträgt.

6. Prepreg nach Anspruch 4 oder 5, dadurch gekennzeichnet, daß das Trägermaterial aus Glasfasern und/oder Aramid- und/oder Acrylfasern besteht.

7. Prepreg nach einem der Ansprüche 4 - 6, dadurch gekennzeichnet, daß die Trägermaterialien in Form eines Geleges, Gewebes oder Vlieses angeordnet sind.

8. Prepreg nach Anspruch 4 oder 5, dadurch gekennzeichnet, daß das Trägermaterial aus einer Kunststoffolie besteht.

9. Prepreg nach einem der Ansprüche 4 bis 8, dadurch gekennzeichnet, daß das Epoxyharz eines auf Basis eines epoxidierten Phenolnovolaks ist.

10. Prepreg nach einem der Ansprüche 4 bis 9, dadurch gekennzeichnet, daß das Epoxyharz eines auf Basis eines epoxidierten Kresolnovolaks ist.

11. Verwendung eines Prepregs nach einem der Ansprüche 4 bis 10 als Isolationsmaterial für elektrische Maschinen und Umformer.

## Claims

1. A halogen-free resin mixture composed of:
a) 20 - 60 weight % epoxy resin
b) 20 - 60 weight % phenolic novolak hardener,
c) at least 5 weight % zinc borate as flame retardant, and
d) 0 - 30 weight % additives.

2. A resin mixture according to Claim 1, characterized in that the epoxy resin is one of the type of an epoxidised phenol novolak.

3. A resin mixture according to Claim 1, characterized in that the epoxy resin is one of the type of an epoxidised kresol novolak.

4. A self-extinguishing prepreg with a resin mixture content of 40 - 200 % mass, produceable by application of a halogen-free resin mixture according to Claim 1 on plane carrier materials.

5. A prepreg according to Claim 4, characterized in that the resin mixture content is 40 to 140 %.

6. A prepreg according to Claim 4 or 5, characterized in that the carrier material is composed of glass fibers and/or aramide and/or acryl fibers.

7. A prepreg according to one of Claims 4 - 6, characterized in that the carrier materials are arranged in the form of a web of fibers, a fabric or fleece.

8. A prepreg according to Claim 4 or 5, characterized in that the the carrier material is composed of a plastic foil.

9. A prepreg according to one of Claims 4 - 8, characterized in that the epoxy resin is one of the type of epoxidised phenolic novolak.

10. A prepreg according to one of Claims 4 - 9, characterized in that the epoxy resin is one of the type of an epoxidised kresol novolak.

11. Use of a prepreg according to one of Claims 4 - 10 as insulation material for electrical machines and converters.

## Revendications

1. Mélange de résines exemptes d'halogène, constitué de:
a) 20 à 60 % en poids de résine époxy
b) 20 à 60 % en poids de durcisseur novolaque phénolique
c) au moins 5 % en poids de borate de zinc à titre d'agent ignifuge, et
d) 0 à 30 % en poids d'additifs.

2. Mélange de résine selon la revendication 1, caractérisé en ce que la résine époxy est à base de novolaque phénolique époxydée.

3. Mélange de résine selon la revendication 1, caractérisé en ce que la résine époxy est à base de novolaque crésol époxydée.

4. Préimprégné auto-extinguible comportant une enduction de 40 à 200 % de résine pouvant être fabriquée par application d'un mélange de résines exemptes d'halogène selon la revendication 1, sur des matériaux de support plans.

5. Préimprégné selon la revendication 4. caractérisé en ce que l'enduction de résine est de 40 à 140 %.

6. Préimprégné selon la revendication 4 ou la revendication 5, caractérisé en ce que le matériau de support se compose de fibres de verre et/ou de fibres aramide et/de fibres ou acryliques.

7. Préimprégné selon l'une des revendication 4 à 6, caractérisé en ce que les matériaux de support sont disposés sous la forme d'une nappe, d'un tissu ou d'un non-tissé.

8. Préimprégné selon la revendication 4 ou 5, caractérisé en ce que le matériau de support est constitué d'une feuille de matière synthétique.

9. Préimprégné selon l'une des revendications 4 à 8, caractérisé en ce que la résine époxy est une résine à base de novolaque phénolique époxydée.

10. Préimprégné selon l'une des revendications 4 à 9, caractérisé en ce que la résine époxy est une résine à base de novolaque crésol époxydée.

11. Utilisation d'un préimprégné selon l'une des revendications 4 à 10 comme matériau d'isolation pour des machines électriques et des convertisseurs.
